(19) Europäisches Patentamt
European Patent Office
Office européen des brevets

(11) **EP 3 382 889 B1**

(12) **EUROPEAN PATENT SPECIFICATION**

(45) Date of publication and mention
of the grant of the patent:
**08.12.2021 Bulletin 2021/49**

(21) Application number: **16868299.5**

(22) Date of filing: **21.10.2016**

(51) Int Cl.:
*H02P 27/06* (2006.01)    *H02P 21/22* (2016.01)
*B60L 3/00* (2019.01)    *B60L 3/12* (2006.01)

(86) International application number:
**PCT/JP2016/081191**

(87) International publication number:
**WO 2017/090350 (01.06.2017 Gazette 2017/22)**

(54) **CONTROL DEVICE FOR ELECTRIC MACHINE, AND ELECTRIC VEHICLE USING SAME**

STEUERUNGSVORRICHTUNG FÜR EINE ELEKTRISCHE MASCHINE UND ELEKTROFAHRZEUG DAMIT

DISPOSITIF DE COMMANDE POUR MACHINE ÉLECTRIQUE ET VÉHICULE ÉLECTRIQUE L'UTILISANT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.11.2015 JP 2015229271**

(43) Date of publication of application:
**03.10.2018 Bulletin 2018/40**

(73) Proprietor: **Hitachi Astemo, Ltd.
Hitachinaka-shi, Ibaraki 312-8503 (JP)**

(72) Inventors:
• **ARAKI Takahiro
Tokyo 100-8280 (JP)**

• **MIYAZAKI Hideki
Hitachinaka-shi
Ibaraki 312-8503 (JP)**
• **MITSUI Toshisada
Hitachinaka-shi
Ibaraki 312-8503 (JP)**

(74) Representative: **MERH-IP Matias Erny Reichl
Hoffmann
Patentanwälte PartG mbB
Paul-Heyse-Strasse 29
80336 München (DE)**

(56) References cited:
**JP-A- H11 150 986    JP-A- 2004 248 377
JP-A- 2008 005 688    JP-A- 2008 005 688
JP-A- 2009 100 599    JP-A- 2009 100 599**

**Description**

Technical Field

The present invention relates to a control device of a motor and an electric vehicle using the same.

Background Art

Hybrid vehicles and electric vehicles are desired to improve the output torque per unit volume of the vehicle from the viewpoint of improving the reliability from the viewpoint of preventing occurrence of failures while the vehicle is traveling and from the viewpoint of weight reduction of the vehicle. Three-phase 6-wire type driving devices are considered to respond to these demands, but since a motor not connected with a neutral point is used, 3n-th harmonic current is superimposed on the driving current for driving the motor, and there is a problem in that loss such as copper loss increases .

As background technology in this technical field, there is JP 2004-80975 A (PTL 1). In this PTL 1, "3n-th harmonic current (3 is the number of phases, n is an integer) included in the driving current for driving the motor is detected and the 3n-th harmonic voltage command value for canceling is calculated to correct the three-phase voltage command value". Accordingly, PTL 1 aims to correct the target voltage so as to cancel the 3n-th harmonic current, so that the harmonic current in the driving current can be removed and the loss due to the harmonic current can be reduced.

PTL 1 discloses a control device for an electric motor wherein coils are independently connected for each phase. Furthermore, voltage which is applied to the electric motor is controlled and a zero-phase voltage that reduces a zero-phase current found in the basis of AC currents of phases is outputted. Moreover, phase currents flowing through the electric motor are detected.

Furthermore, PTL 2 discloses a motor control device including a power converter that performs PWM control to supply power to a motor.

Citation List

Patent Literature

    PTL 1: JP 2004-80975 A
    PTL 2: JP 2008 005 688 A
    PTL 3: JP 2009 100 599 A

Summary of Invention

Technical Problem

If a zero-phase voltage is output during the current detection period, an error may occur in the detected value of the zero-phase current, and the zero-phase current cannot be removed.

It is an object of the present invention to reduce detection error of the zero-phase current.

Solution to Problem

In order to solve the above issue, for example, a configuration described in the claims is employed and solved by the features of the independent claim. The dependent claims are directed to preferred embodiments of the invention. To achieve the above-described objective. To achieve the above-described object, a control device of a motor according to the present invention is a control device in which a winding is independently connected for each phase, the control device including: a control unit controlling a voltage applied to the motor on the basis of a torque command value, wherein the control unit provides a first period in which a zero-phase voltage pulse for outputting a zero-phase voltage for reducing a zero-phase current which is determined based on an alternating current of each phase is output, and a second period in which a current of each phase flowing in the motor is detected, and the first period and the second period are not overlapped.

Advantageous Effects of Invention

According to a control device of a motor of the present invention, detection error of the zero-phase current can be reduced.

Brief Description of Drawings

[FIG. 1] FIG. 1 is a diagram showing a configuration of a motor drive system according to an embodiment of the present invention.
[FIG. 2] FIG. 2 is a control block diagram explaining a first embodiment.
[FIG. 3] FIG. 3 is a flowchart of a switching signal generation unit 40.
[FIG. 4] FIG. 4 is a diagram showing a waveform example of zero-phase voltage output timing when the present embodiment is applied.
[FIG. 5] FIG. 5 is a control block diagram explaining a second embodiment.
[FIG. 6] FIG. 6 is a control block diagram illustrating a third embodiment.

Description of Embodiments

Embodiments of the present invention will now be described with reference to the drawings. However, the present invention is not to be construed as being limited to the following embodiments, and other known components may be combined to realize the technical concept of the present invention. In each figure, the same reference numerals are given to the same elements, and redundant explanations thereabout are omitted.

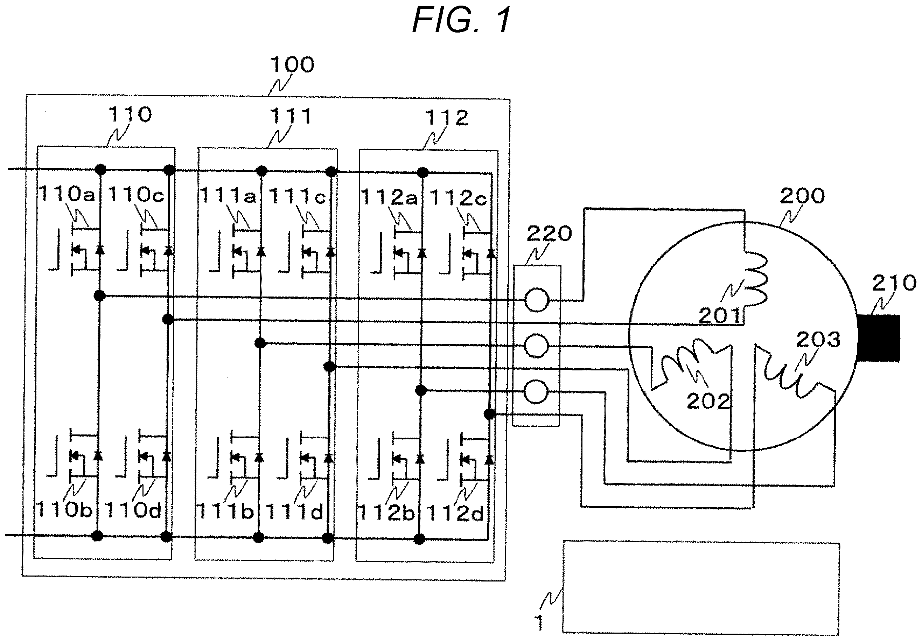

FIG. 1 is a diagram showing a configuration of a motor drive system according to an embodiment of the present invention. The motor drive system includes a motor 200, a position sensor 210, a current sensor 220, an inverter 100, and a motor control device 1.

The motor 200 is composed of an embedded magnet synchronous motor or the like to which a neutral point is not connected. The U-phase winding 201 wound around the stator of the motor 200 is connected to an output terminal of the U-phase full bridge inverter 110. The V-phase winding 202 wound around the stator of the motor 200 is connected to an output terminal of the V-phase full bridge inverter 111. The W-phase winding 203 wound around the stator of the motor 200 is connected to an output terminal of the W-phase full bridge inverter 112. Since the neutral point is not connected to the motor 200, it is possible to independently control the currents flowing through the U-phase winding 201, the V-phase winding 202, and the W-phase winding 203. However, since the neutral point of the motor 200 is not connected, as described in PTL 1, the drive currents flowing through the U-phase winding 201, the V-phase winding 202, and the W-phase winding 203 include 3n-th harmonic current.

The position sensor 210 detects the position of a rotor of the motor 200 and outputs the detected rotor position $\theta$.

The current sensor 220 detects the currents flowing through the U-phase winding 201, the V-phase winding 202 and the W-phase winding 203 wound around the stator of the motor 200, and outputs the detected three-phase currents $i_u$, $i_v$, $i_w$.

The inverter 100 includes a U-phase full bridge inverter 110, a V-phase full bridge inverter 111, and a W-phase full bridge inverter 112. The U-phase full bridge inverter 110, the V-phase full bridge inverter 111, and the W-phase full bridge inverter 112 are connected in parallel to a direct current power supply (not shown).

The U-phase full bridge inverter 110 is composed of switching elements 110a to 110d. The switching element 110a is arranged on a U-phase left leg upper arm. The switching element 110b is arranged on a U-phase left leg lower arm. The switching element 110c is arranged on a U-phase right leg upper arm. The switching element 110d is arranged on a U-phase right leg lower arm.

The V-phase full bridge inverter 111 is composed of switching elements 111a to 111d. The switching element 111a is arranged on a V-phase left leg upper arm. The switching element 111b is arranged on a V-phase left leg lower arm. The switching element 111c is arranged on a V-phase right leg upper arm. The switching element 111d is arranged on a V-phase right leg lower arm.

The W-phase full bridge inverter 112 is configured by switching elements 112a to 112d. The switching element 112a is arranged on a W-phase left leg upper arm. The switching element 112b is arranged on a W-phase left leg lower arm. The switching element 112c is arranged on a W-phase right leg upper arm. The switching element 112d is arranged on a W-phase right leg lower arm.

By switching on or off the switching elements 110a to 110d, the switching elements 111a to 111d, and the switching elements 112a to 112d based on the switching signal generated by the inverter control device 1, the inverter 100 converts a direct current voltage applied from a direct current power supply (not shown) to an alternating current voltage. The converted alternating current voltage is applied to the three-phase windings 201 to 203 wound around the stator of the motor 200 to generate three-phase alternating current. This three-phase alternating current generates a rotating magnetic field in the motor 200, and the rotor rotates.

The switching elements 110a to 110d, the switching elements 111a to 111d, and the switching elements 112a to 112d are formed by combining a metal oxide film type field effect transistor (MOSFET), an insulated gate bipolar transistor (IGBT) and the like, and diodes. In the present embodiment, a configuration using a MOSFET and a diode will be described.

The motor control device 1 PWM-controls the inverter 100 based on an external torque command T*, three-phase currents $i_u$, $i_v$, $i_w$ detected by the current sensor 220, and a rotor position $\theta$ detected by the position sensor 210.

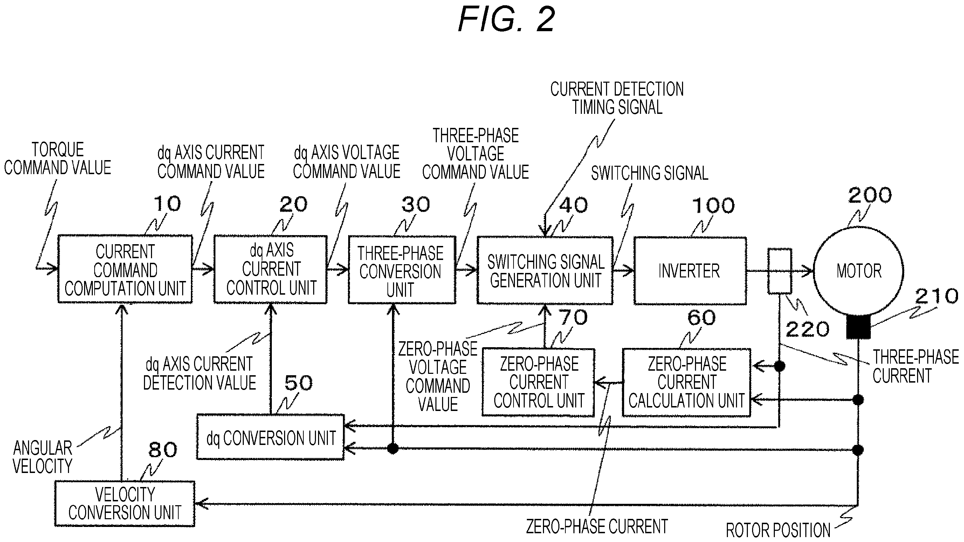

FIG. 2 is a control block diagram explaining the first embodiment of the present invention. The current command computation unit 10 calculates the dq axis current command values $i_d^*$, $i_q^*$ based on the input torque command value T* and the angular velocity $\omega$. Examples of the calculation method for calculating the dq axis current command values $i_d^*$, $i_q^*$ include maximum torque current control, weak field control, and the like, but explanation thereabout is omitted since they are well known. For calculation of the dq axis current command values $i_d^*$, $i_q^*$, a previously configured table may be used.

The dq axis current control unit 20 receives the dq axis current command values $i_d^*$, $i_q^*$ and the dq axis current detection values $i_d$, $i_q$, and outputs the dq axis voltage command value $v_d^*$, $v_q^*$ using proportional control, integral control, and the like.

The three-phase conversion unit 30 receives the dq axis voltage command values $v_d^*$, $v_q^*$ and the rotor position $\theta$, and outputs the three-phase voltage command values $v_u^*$, $v_v^*$, $v_w^*$.

The switching signal generation unit 40 receives the three-phase voltage command value $v_u^*$, $v_v^*$, $v_w^*$, the zero-phase voltage command value $v_0^*$, and the current detection timing signals t1, t2, and generates switching signals for turning on or off the switching elements 110a to 110d, the switching elements 111a to 111d, and the switching elements 112a to 112d.

A switching signal is input to the inverter 100, and the motor is operated by the operation.

The dq conversion unit 50 receives the three-phase current $i_u$, $i_v$, $i_w$ detected by the current sensor 220 and the rotor position $\theta$ detected by the position sensor 210, and outputs the dq axis current detection values $i_d$, $i_q$.

The zero-phase current calculation unit 60 receives the three-phase current $i_u$, $i_v$, $i_w$ detected by the current sensor 220 and the rotor position $\theta$ detected by the position sensor 210, and outputs the zero-phase current $i_0$. The calculation expression of the zero-phase current $i_0$ is shown in expression (1).

[Math 1]

$$i_0 = \frac{i_u}{\sqrt{3}} + \frac{i_v}{\sqrt{3}} + \frac{i_w}{\sqrt{3}} \quad \cdots (1)$$

Since the zero-phase current $i_0$ changes according to the rotational velocity of the motor 200, the zero-phase current $i_0$ may be calculated in consideration of the zero-phase current value estimated from the angular velocity $\omega$ of the motor 200.

The zero-phase current control unit 70 acquires the zero-phase current $i_0$ and outputs the zero-phase voltage command value $v_0$ by using proportional control, integral control, and the like. The velocity conversion unit 80 obtains the rotor position $\theta$ detected by the position sensor 210 and outputs angular velocity $\omega$.

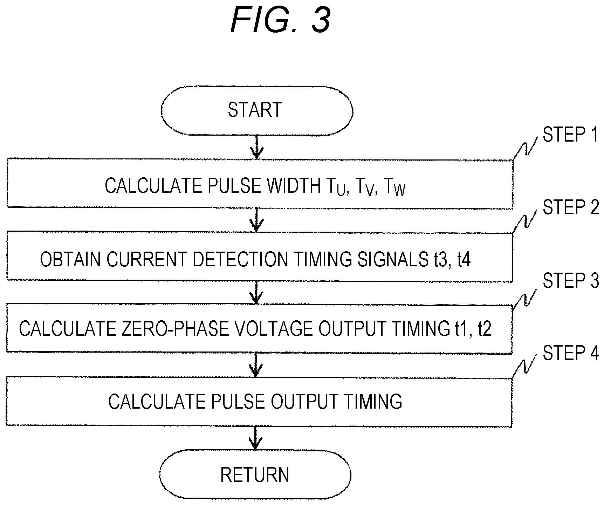

FIG. 3 is a flowchart of the switching signal generation unit 40. First, in step 1, the switching signal generation unit 40 calculates the U-phase voltage pulse width $T_U$, the V-phase voltage pulse width $T_V$, and the W-phase voltage pulse width $T_W$ on the basis of the three-phase voltage command value $v_u^*$, $v_v^*$, $v_w^*$ output from the three-phase conversion unit 30, the zero-phase voltage command value $v_0^*$ output from the zero-phase voltage control unit 70, the direct current power supply voltage $V_{DC}$, the carrier frequency $f_{carrier}$. There are plural combinations of pulses for outputting zero-phase voltage, but in the following description, it is assumed that one pulse is output in each phase in one carrier cycle. Under the above conditions, the calculation expression of U-phase voltage pulse width $T_U$ is shown in expression (2), the calculation expression of V-phase voltage pulse width $T_V$ is shown in expression (3), and the calculation expression of W-phase voltage pulse width $T_W$ is shown in expression (4).

[Math 2]

$$T_U = \frac{v_U{}^* + v_0{}^*}{V_{DC}} \times \frac{1}{f_{carrier}} \qquad \cdots (2)$$

[Math 3]

$$T_V = \frac{v_V{}^* + v_0{}^*}{V_{DC}} \times \frac{1}{f_{carrier}} \qquad \cdots (3)$$

[Math 4]

$$T_W = \frac{v_W{}^* + v_0{}^*}{V_{DC}} \times \frac{1}{f_{carrier}} \qquad \cdots (\cdot$$

Next, in step 2, the switching signal generation unit 40 obtains a current detection start timing t3 and a current detection end timing t4.

Next, in step 3, the switching signal generation unit 40 calculates the zero-phase voltage output start timing t1 and the zero-phase voltage output end timing t2. At this time, since the current detection period and the zero-phase voltage output period are not overlapped, the zero-phase voltage output start timing t1 and the zero-phase voltage output end timing t2 are configured to satisfy the relationship of the expression (5) or the expression (6).

[Math 5]

$$t2 \leq t3 \qquad \cdots (5)$$

[Math 6]

$$t4 \leq t1 \qquad \cdots (6)$$

Next, in step 4, the switching signal generation unit 40 calculates timing for outputting the pulse of each phase on the basis of the U-phase voltage pulse width $T_U$, the V-phase voltage pulse width $T_V$, the W-phase voltage pulse width $T_W$ calculated in step 1, and the zero-phase voltage output start timing t1 and the zero-phase voltage output end timing t2 calculated in step 3.

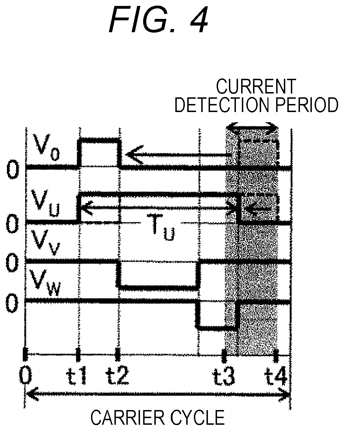

FIG. 4 is a diagram showing a waveform example of zero-phase voltage output timing when the present embodiment is applied. $V_0$ indicates a zero-phase voltage pulse.

When outputting a zero-phase voltage by outputting one pulse in each phase in one carrier cycle, the U-phase pulse with the longest pulse width is output first. Therefore, the output timing of the U-phase pulse coincides with the zero-phase voltage output start timing t1. Next, at the zero-phase voltage output end timing, the V-phase pulse which is one phase of the remaining two phases is output. Finally, after the output of the V-phase pulse is completed, the pulse of the W-phase which is the remaining one phase is output. In the figure, the V-phase pulse is output first, but it is also possible to output the W-phase pulse first.

As a result, t1 to t2 (e.g., the first period) during which the zero-phase voltage pulse $V_0$ is generated are set so as to avoid the current detection period from t3 to t4 (for example, the second period) . Therefore, the pulse of each phase that does not generate a zero-phase voltage during the current detection period is output. The second period which is the current detection period may be set to avoid the first period in which the zero-phase voltage pulse $V_0$ is generated.

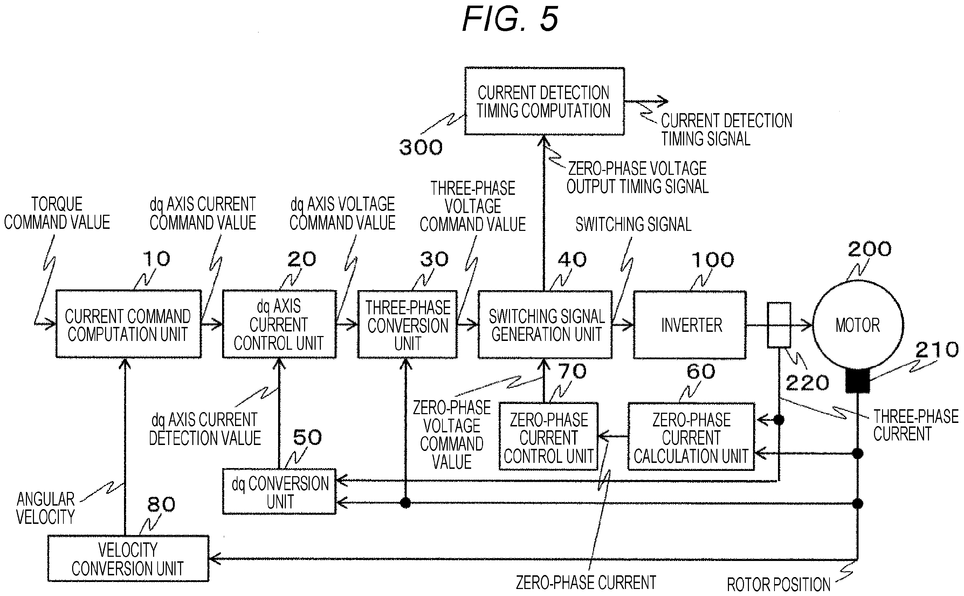

FIG. 5 is a block diagram showing a second embodiment of the present invention. The block diagram shown in FIG. 5 is a configuration obtained by adding current detection timing computation 300 to the block diagram shown in FIG. 2.

In FIG. 5, the switching signal generation unit 40 not only generate the switching signal for turning on or off the switching elements 110a to 110d, the switching elements 111a to 111d, and the switching elements 112a to 112d as shown in FIG. 1 on the basis of the input three-phase voltage command values $v_u^*$, $v_v^*$, $v_w^*$, the zero-phase voltage command value $v_0^*$, and the current detection timing signal t3, t4, but also outputs the zero-phase voltage output timing t1, t2.

The current detection timing computation 300 outputs the current detection start timing t3 and the current detection end timing t4 on the basis of the zero-phase voltage output start timing t1 and the zero-phase voltage output end timing t2, which have been input, so that the period in which the zero-phase voltage is output and the period in which the current is detected are not overlapped.

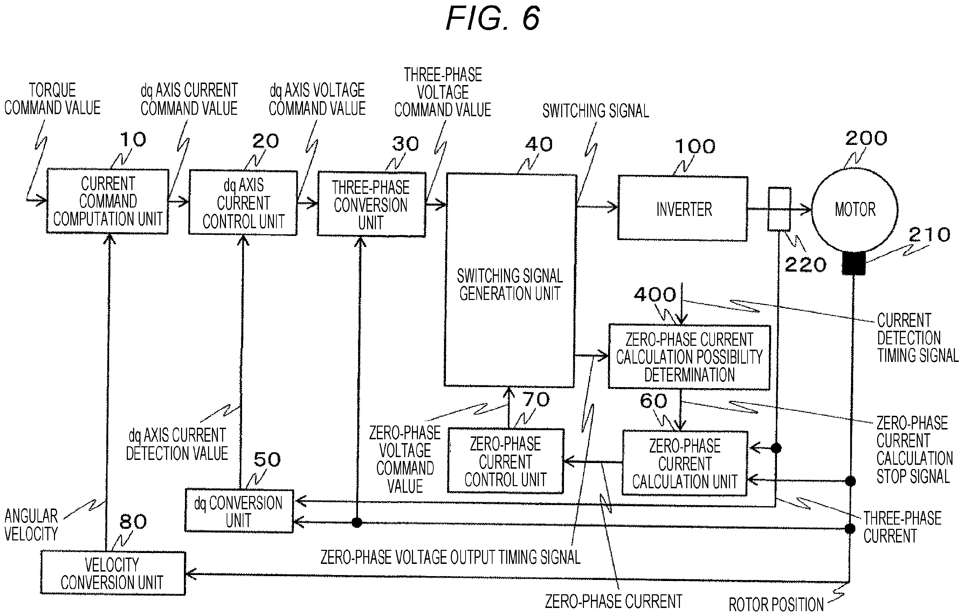

FIG. 6 is a block diagram showing a third embodiment of the present invention. The block diagram shown in FIG. 6 is a configuration obtained by adding the zero-phase current calculation possibility determination 400 to the block diagram shown in FIG. 2.

In FIG. 6, the switching signal generation unit 40 not only generates switching signals for turning on or off the switching elements 110a to 110d, the switching element 111a to 111d, and the switching elements 112a to 112d shown in FIG. 1 on the basis of the input three-phase voltage command values $v_u^*$, $v_v^*$, $v_w^*$ and the zero-phase voltage command value $v_0^*$, but also outputs the zero-phase voltage output timing signals t1, t2.

The zero-phase current calculation possibility determination 400 determines whether the zero-phase voltage is output in the current detection period on the basis of the zero-phase voltage output start timing t1, the zero-phase voltage output end timing t2, the current detection start timing t3, and the current detection end timing t4, which are input. For example, the determination method is whether or not the t3 to t4, which are the current detection period, can be reserved in the 1 carrier cycle or not, and the like. When the zero-phase voltage is output during the current detection period, a zero-phase current calculation end signal is output, and the calculation of zero-phase current at zero-phase current calculation unit 60 is ended in the corresponding carrier cycle.

As described above, according to the present invention, the effect that the detection error of the zero-phase current is reduced can be obtained by generating a period in which the zero-phase voltage is not output, and detecting the current in that period. Reference Signs List

| | |
|---|---|
| 10 | current command computation unit |
| 20 | dq axis current control unit |
| 30 | three-phase conversion unit |
| 40 | switching signal generation unit |
| 50 | dq conversion unit |
| 60 | zero-phase current calculation unit |
| 70 | zero-phase current control unit |
| 80 | velocity conversion unit |
| 100 | inverter |
| 110 | U-phase full bridge inverter |

**EP 3 382 889 B1**

| | |
|---|---|
| 110a | switching element |
| 110b | switching element |
| 110c | switching element |
| 110d | switching element |
| 111 | V-phase full bridge inverter |
| 110a | switching element |
| 110b | switching element |
| 110c | switching element |
| 110d | switching element |
| 112 | W-phase full bridge inverter |
| 112a | switching element |
| 112b | switching element |
| 112c | switching element |
| 112d | switching element |
| 200 | motor |
| 210 | position sensor |
| 220 | current sensor |
| 300 | current detection timing computation |
| 400 | zero-phase current calculation possibility determination |
| $f_{carrier}$ | carrier frequency |
| $i_u$ | U-phase current |
| $i_v$ | V-phase current |
| $i_w$ | W-phase current |
| $i_d^*$ | d axis current command value |
| $i_q^*$ | q axis current command value |
| $i_d$ | d axis current detection value |
| $i_q$ | q axis current detection value |
| $i_0$ | zero-phase current |
| $i_0^*$ | zero-phase current command value |
| t1 | zero-phase voltage output start timing |
| t2 | zero-phase voltage output end timing |
| t3 | current detection start timing |
| t4 | current detection end timing |
| $T^*$ | torque command value |
| $T_U$ | U-phase voltage pulse width |
| $T_V$ | V-phase voltage pulse width |
| $T_W$ | W-phase voltage pulse width |
| $V_{DC}$ | direct current power supply voltage |
| $v_u$ | U-phase output voltage |
| $v_v$ | V-phase output voltage |
| $v_w$ | W-phase output voltage |
| $v_0$ | zero-phase output voltage |
| $v_u^*$ | U-phase voltage command value |
| $v_v^*$ | V-phase voltage command value |
| $v_w^*$ | W-phase voltage command value |
| $v_d^*$ | d axis voltage command value |
| $v_q^*$ | q axis voltage command value |
| $v_0^*$ | zero-phase voltage command value |
| $\omega$ | angular velocity |

**Claims**

1. A control device (1) of a motor (200) in which a winding is independently connected for each phase, the control device (1) comprising:

   - a control unit controlling a voltage applied to the motor (200) on the basis of a torque command value, wherein

7

the control unit provides a first period in which a zero-phase voltage pulse for outputting a zero-phase voltage for reducing a zero-phase current which is determined based on an alternating current of each phase is output, and a second period in which a current of each phase flowing in the motor (200) is detected,
**characterized in that**

the first period and the second period are not overlapped, and
the zero-phase current is detected in the second period, in which the zero-phase voltage is not output.

2. The control device (1) of the motor (200) according to claim 1, wherein, when the second period cannot be set which does not overlap with the first period, the control unit does not use the zero-phase current calculated from the current detected in the second period for the control

3. An electric vehicle comprising the control device (1) of the motor (200) according to any one of claims 1 to 2,

**Patentansprüche**

1. Steuervorrichtung (1) eines Motors (200), in dem für jede Phase eine Wicklung unabhängig angeschlossen ist, wobei die Steuervorrichtung (1) Folgendes umfasst:

- eine Steuereinheit, die eine Spannung steuert, die an den Motor (200) angelegt wird, auf der Grundlage eines Drehmomentbefehlswertes, wobei

die Steuereinheit eine erste Periode bereitstellt, in der ein Nullphasenspannungsimpuls zum Ausgeben einer Nullphasenspannung zum Verringern eines Nullphasenstroms, der basierend auf einem Wechselstrom jeder Phase detektiert wird, ausgegeben wird, und eine zweite Periode bereitstellt, in der ein Strom jeder Phase, der in den Motor (200) fließt, detektiert wird,
**dadurch gekennzeichnet, dass**

die erste Periode und die zweite Periode nicht überlappen und
der Nullphasenstrom in der zweiten Periode detektiert wird, in der die Nullphasenspannung nicht ausgegeben wird.

2. Steuervorrichtung (1) des Motors (200) nach Anspruch 1, wobei dann, wenn die zweite Periode, die nicht mit der ersten Periode überlappt, nicht eingestellt werden kann, die Steuereinheit den Nullphasenstrom, der aus dem Strom berechnet worden ist, der in der zweiten Periode für die Steuerung detektiert worden ist, nicht verwendet.

3. Elektrofahrzeug, das die Steuervorrichtung (1) des Motors (200) nach einem der Ansprüche 1 bis 2 umfasst.

**Revendications**

1. Dispositif de commande (1) d'un moteur (200) dans lequel un bobinage est connecté indépendamment pour chaque phase,
le dispositif de commande (1) comprenant :

- une unité de commande commandant une tension appliquée au moteur (200) sur la base d'une valeur d'ordre de couple, dans lequel

l'unité de commande fournit une première période dans laquelle une impulsion de tension de phase zéro destinée à sortir une tension de phase zéro pour réduire un courant de phase zéro qui est déterminé sur la base d'un courant alternatif de chaque phase est sortie, et une seconde période dans laquelle un courant de chaque phase s'écoulant dans le moteur (200) est détecté,
**caractérisé en ce que**

la première période et la seconde période ne se chevauchent pas, et
le courant de phase zéro est détecté dans la seconde période dans laquelle la tension de phase zéro n'est pas sortie.

2. Dispositif de commande (1) du moteur (200) selon la revendication 1, dans lequel, quand la seconde période ne peut pas être fixée, qui ne se chevauche pas avec la première période, l'unité de commande n'utilise pas le courant de phase zéro calculé à partir du courant détecté dans la seconde période pour la commande.

3. Véhicule électrique comprenant le dispositif de commande (1) du moteur (200) selon l'une quelconque des revendications 1 à 2.

*FIG. 1*

EP 3 382 889 B1

## FIG. 2

# FIG. 3

START

STEP 1

CALCULATE PULSE WIDTH $T_U$, $T_V$, $T_W$

STEP 2

OBTAIN CURRENT DETECTION TIMING SIGNALS $t3$, $t4$

STEP 3

CALCULATE ZERO-PHASE VOLTAGE OUTPUT TIMING $t1$, $t2$

STEP 4

CALCULATE PULSE OUTPUT TIMING

RETURN

# FIG. 4

CURRENT
DETECTION PERIOD

$V_0$

0

$V_U$

0

$T_U$

$V_V$

0

$V_W$

0

0  t1  t2  t3  t4

CARRIER CYCLE

# FIG. 5

CURRENT DETECTION
TIMING COMPUTATION → CURRENT DETECTION
TIMING SIGNAL

300

ZERO-PHASE VOLTAGE
OUTPUT TIMING SIGNAL

TORQUE
COMMAND VALUE

dq AXIS CURRENT
COMMAND VALUE

dq AXIS VOLTAGE
COMMAND VALUE

THREE-PHASE
VOLTAGE
COMMAND VALUE

SWITCHING SIGNAL

10 — CURRENT COMMAND COMPUTATION UNIT

20 — dq AXIS CURRENT CONTROL UNIT

30 — THREE-PHASE CONVERSION UNIT

40 — SWITCHING SIGNAL GENERATION UNIT

100 — INVERTER

200 — MOTOR

210 — THREE-PHASE CURRENT

220

dq AXIS CURRENT
DETECTION VALUE

ZERO-PHASE
VOLTAGE
COMMAND
VALUE

70 — ZERO-PHASE CURRENT CONTROL UNIT

60 — ZERO-PHASE CURRENT CALCULATION UNIT

50 — dq CONVERSION UNIT

ANGULAR
VELOCITY

80 — VELOCITY CONVERSION UNIT

ZERO-PHASE CURRENT

ROTOR POSITION

EP 3 382 889 B1

14

## FIG. 6

EP 3 382 889 B1

**EP 3 382 889 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004080975 A
- JP 2008005688 A
- JP 2009100599 A